# FASCICULE DE BREVET EUROPEEN

(11) **EP 3 912 528 B1**
(45) Date de publication et mention de la délivrance du brevet: **16.08.2023**
(21) Numéro de dépôt: 21174515.3
(22) Date de dépôt: 18.05.2021
(51) Int. Cl.: A47J 37/06

(54) **APPAREIL DE CUISSON ÉQUIPÉ D'UNE CUVE AVEC UN SYSTÈME DÉMONTABLE POUR L'ENTRAINEMENT D'UNE PALE DE BRASSAGE ET PROCÉDÉ DE MONTAGE DUDIT SYSTÈME**
KOCHGERÄT, DAS MIT EINEM BEHÄLTER MIT EINEM ABNEHMBAREN SYSTEM ZUM ANTRIEB EINES RÜHRBLATTS AUSGESTATTET IST, UND MONTAGEVERFAHREN DIESES SYSTEMS
COOKING APPLIANCE PROVIDED WITH A VESSEL WITH A REMOVABLE SYSTEM FOR DRIVING A STIRRING BLADE AND METHOD FOR MOUNTING SAID SYSTEM

(30) Priorité: 19.05.2020 FR 2005038
(43) Date de publication de la demande: 24.11.2021
(73) Titulaire: SEB S.A., 69130 Ecully (FR)
(72) Inventeur: ALLEMAND, Bernard, 70100 VELESMES-ECHEVANNE (FR); FRADET, Gautier, 21120 ECHEVANNES (FR)
(74) Mandataire: SEB Développement

(56) Documents cités:
- WO-A1-2017/085676
- WO-A1-2018/050838
- WO-A1-2020/077793
- CN-U- 208 973 522
- FR-A1- 3 029 095

## Description

### Domaine technique

La présente invention concerne les appareils de cuisson qui comprennent une cuve dans laquelle est positionné un accessoire de cuisine amovible, notamment une pale de brassage, la cuve comportant un système d'entraînement permettant la réception et l'entraînement en rotation dudit accessoire de cuisine placé à l'intérieur de la cuve. L'invention porte notamment sur la conception du système d'entraînement de la cuve, afin de permettre son démontage et son montage aisément vis-à-vis de la cuve.

L'invention sera préférentiellement mise en oeuvre sur des appareil de cuisson à air chaud, du type friteuse à air chaud, qui permettent de réaliser une cuisson des aliments au moyen d'une circulation d'air chaud dans une enceinte de cuisson de cet appareil.

### Etat de la technique

Les appareils de cuisson du type friteuse à air chaud sont bien connus de l'homme du métier. Un tel appareil de cuisson permet de réduire fortement la quantité de matière grasse, voire de la supprimer complètement, lors de la cuisson des aliments qui s'effectue grâce à une circulation d'air chaud dans une enceinte de cuisson contenant les aliments à cuire. Ainsi, il est possible de consommer des aliments plus diététiques, ces aliments pouvant être d'origine végétale ou animale, par exemple des frites, des légumes, de la viande ou du poisson.

Un tel appareil de cuisson comprend généralement un corps et une cuve amovible qui permet la réception des aliments à cuire. Les aliments peuvent être placés soit directement dans la cuve soit dans un panier qui est lui-même placé dans la cuve. Une fois les aliments disposés dans la cuve, avec ou sans le panier, l'appareil de cuisson peut être fermé pour former une enceinte de cuisson incorporant la cuve et les aliments. De l'air chaud est ensuite pulsé dans cette enceinte de cuisson au moyen d'un dispositif de chauffe et d'un dispositif de circulation d'air, la circulation de l'air chaud dans l'enceinte assurant la cuisson des aliments.

Un tel appareil de cuisson à air chaud comprend en outre un accessoire de cuisine, du type pale de brassage, qui se positionne dans la cuve et permet de brasser les aliments durant leur cuisson. Cette pale de brassage est entraînée en rotation grâce à un système d'entraînement en rotation.

Il est par exemple connu le modèle d'utilité chinois CN208973522U qui décrit un appareil de cuisson présentant des caractéristiques semblables à celles précitées. Selon ce modèle d'utilité chinois CN208973522U, la cuve comprend une noix d'entraînement qui est montée en rotation sur le fond de la cuve et passe au travers de celui-ci, la noix d'entraînement étant assujettie à une roue dentée agencée sous le fond de la cuve et tournant selon un même axe de rotation que ladite noix d'entraînement. Une première pièce de fixation est agencée au-dessus du fond de la cuve et une seconde pièce de fixation est agencée en-dessous de la cuve, ces deux pièces de fixation assurant le maintien en rotation de la roue dentée et de la noix d'entraînement sur le fond de la cuve. La pale de brassage, disposée dans la cuve, est accouplée à cette noix d'entraînement. Le corps de l'appareil comprend un moteur qui entraîne en rotation un pignon dentée, ce pignon denté étant agencé dans le fond de l'enceinte de cuisson. Lorsque la cuve est placée dans l'enceinte de cuisson, la roue dentée vient engrener avec le pignon denté, la rotation du moteur permettant ainsi l'entraînement en rotation de la pale de brassage dans la cuve.

### Exposé de l'invention

La présente invention a pour premier objectif de faciliter le montage et le démontage des éléments du système d'entraînement de l'accessoire de cuisine, qui sont présents sur la cuve. Cela facilitera tout d'abord le nettoyage de la cuve en démontant rapidement le système d'entraînement de la cuve, son remontage se faisant également rapidement et facilement. Cela permettra également de modifier rapidement le mode de cuisson au moyen de la cuve, comme cela sera présenté dans la description suivante.

Un deuxième objectif de l'invention est de permettre une transformation rapide de la cuve pour diversifier ses modes de cuisson, avec ou sans l'accessoire de cuisine.

Un troisième objectif de l'invention est d'étendre les fonctions de l'appareil de cuisson afin que celui-ci dispose de plus de modes de cuisson, afin de cuisiner des recettes diverses et variées.

Ce premier objectif est atteint grâce à l'invention qui porte sur un appareil de cuisson pour la réalisation d'une préparation culinaire. L'appareil comprend un corps muni d'une enceinte de cuisson, une cuve de réception d'aliments apte à être placée dans l'enceinte de cuisson et retirée de celle-ci. Le corps comprend un dispositif motorisé entraînant en rotation un pignon denté accessible depuis l'enceinte de cuisson. La cuve comprend un fond muni d'une première ouverture centrale, une noix d'entraînement montée en rotation selon un axe de rotation perpendiculaire au fond de la cuve et communiquant avec le volume intérieur de la cuve au travers de la première ouverture centrale et une roue dentée montée en rotation selon l'axe de rotation en-dessous du fond et assujettie à la noix d'entraînement. La roue dentée engrène avec le pignon denté lorsque la cuve est placée dans l'enceinte de cuisson. L'homme du métier comprendra que la noix d'entraînement peut communiquer avec le volume intérieur de la cuve au travers de la première ouverture centrale, soit en traversant ladite première ouverture centrale pour se positionner en partie au-dessus du fond de la cuve, soit en demeurant entièrement en-dessous du fond de la cuve, tout en étant accessible depuis le volume intérieur de la cuve, au travers de la première ouverture centrale.

De manière remarquable, selon l'invention, la cuve comprend un carter amovible placé en-dessous de la première ouverture centrale et configuré pour prendre appui contre le dessous du fond de la cuve et pour recevoir et maintenir la roue dentée et la noix d'entraînement, montées en rotation selon l'axe de rotation. En outre, la cuve comprend un palier de roulement amovible placé dans le volume intérieur de la cuve, le palier de roulement étant muni d'un corps et d'un tube. Le corps est configuré pour traverser la première ouverture centrale et prendre appui contre le dessus du fond de la cuve et pour venir en prise avec le carter grâce à un système d'assemblage, de sorte que le carter et le corps du palier de roulement demeurent pressés de part et d'autre contre le fond de la cuve. Le tube prolonge le corps vers le haut dans le volume intérieur de la cuve, au-dessus de la première ouverture, et est apte à recevoir en rotation selon l'axe de rotation un accessoire de cuisine placé dans le volume intérieur de la cuve. La noix d'entraînement s'engage au moins dans le corps du palier de roulement lorsque le carter et le palier de roulement sont en prise, de sorte que ladite noix d'entraînement est apte à engrener avec l'accessoire de cuisine, configuré à cet effet, lorsque ledit accessoire de cuisine est engagé sur le tube.

Ainsi, l'utilisateur peut démonter et remonter facilement les éléments du système d'entraînement sur la cuve ; il lui suffit de loger la roue dentée assujettie à la noix d'entraînement à l'intérieur du carter, de positionner le carter en appui contre le dessous du fond de la cuve en positionnant la noix d'entraînement en regard de la première ouverture centrale, voire en insérant l'extrémité supérieure de ladite noix d'entraînement dans la première ouverture centrale, de positionner le palier de roulement dans le volume intérieur de la cuve et d'introduire le corps du palier de roulement dans la première ouverture centrale jusqu'à ce que ledit corps vienne en appui contre le dessus du fond de la cuve, puis d'effectuer l'assemblage pour maintenir en prise le carter et le corps du palier de roulement grâce au système d'assemblage, le carter et le corps du palier de roulement pressant de part et d'autre du fond de la cuve. Le démontage s'effectue par un mode opératoire inversé, en désassemblant le corps du palier de roulement et le carter pour dégager ensuite le palier de roulement par le dessus de la cuve et le carter, avec la roue dentée et la noix d'entraînement, par le dessous de la cuve.

Selon une réalisation de l'invention, l'appareil comprend un plateau comprenant une seconde ouverture centrale permettant le passage du tube du palier de roulement lorsque ledit plateau est placé dans le volume intérieur de la cuve. En outre, des moyens de blocage de la rotation du plateau selon l'axe de rotation sont agencés entre ledit plateau et le corps du palier de roulement.

L'homme du métier comprend que le passage du tube du palier de roulement au travers de la seconde ouverture centrale s'effectue avant la mise en place de l'accessoire de cuisine. Ainsi, le plateau reste parfaitement immobile dans la cuve durant la rotation de l'accessoire de cuisine qui est positionné au-dessus du plateau dans le volume intérieur de la cuve, lors de l'utilisation du plateau et de l'accessoire de cuisine, selon le mode de cuisson utilisé sur l'appareil de cuisson.

Selon cette réalisation, un système de support est mis en oeuvre entre le plateau et la cuve pour maintenir un espacement entre le fond de la cuve et le plateau. Cet espacement permettra notamment l'ajout d'eau dans le fond de la cuve, en-dessous du plateau, comme cela apparaîtra dans la suite de la description. De préférence, le plateau comprend un piètement configuré pour prendre appui sur le fond de la cuve et supporter le plateau avec ledit espacement par rapport au fond de la cuve. Des variantes sont envisageables pour la mise en oeuvre de ce système de support, par exemple des pattes d'appui agencées sur un contour interne de la cuve, le plateau reposant sur lesdites pattes d'appui en préservant ledit espacement par rapport au fond de la cuve.

De préférence, selon cette réalisation de l'appareil, les moyens de blocage sont mis en oeuvre par la seconde ouverture centrale sur le plateau qui présente une forme polygonale, de préférence une forme carrée, et par un élément de contour sur le corps du palier de roulement, l'élément de contour entourant une portion inférieure du tube et présentant une forme polygonale, de préférence une forme carrée, correspondant à celle de la seconde ouverture centrale, de sorte que la seconde ouverture centrale s'engage sur l'élément de contour lors du positionnement du plateau dans le volume intérieur de la cuve, assurant ainsi ledit blocage. Des variantes de moyens de blocage restent envisageables dans le cadre de l'invention.

Selon l'appareil objet de l'invention, la cuve comprend un joint d'étanchéité positionné à la périphérie de la première ouverture centrale au-dessus du fond de la cuve, le corps du palier de roulement comprenant un disque configuré pour que le joint d'étanchéité soit comprimé entre le dessus du fond de la cuve et ledit disque lorsque le palier de roulement est en prise avec le carter. La présence de ce joint d'étanchéité permettra avantageusement l'introduction de liquide dans le fond de la cuve, par exemple de l'eau. Ce joint d'étanchéité, comprimé entre le fond de la cuve et le disque sur le corps du palier de roulement, garantit en outre le blocage en rotation selon l'axe de rotation, du carter et du palier de roulement en prise l'un dans l'autre grâce au système d'assemblage.

Selon une réalisation de l'appareil objet de l'invention, le système d'assemblage entre le carter et le corps du palier de roulement est un système à baïonnette. Ce système à baïonnette permettra d'effectuer l'assemblage entre le carter et le corps du palier de roulement en effectuant plus ou moins une rotation d'un quart de tour entre ces deux éléments selon l'axe de rotation, ce qui assure une prise rapide entre le carter et le palier de roulement. D'autres systèmes d'assemblage en effectuant une rotation d'un quart de tour pourraient être envisagés, notamment un vissage à un quart de tour. D'autres systèmes d'assemblage pourraient également être envisagés, par exemple un système d'encliquetage du corps du palier de roulement sur le carter, un organe de manoeuvre sur le corps du palier de roulement permettant son décliquetage du carter.

Selon une réalisation l'appareil objet de l'invention, le carter comprend une portion tubulaire supérieure munie d'un épaulement externe. Cette portion tubulaire supérieure est configurée pour s'emboîter dans la première ouverture centrale jusqu'à ce qu'un rebord du fond de la cuve, définissant ladite première ouverture centrale, vienne en appui contre ledit épaulement externe. Selon cette réalisation, le corps du palier de roulement comprend une portion tubulaire inférieure configurée pour s'engager dans la portion tubulaire supérieure du carter, le système d'assemblage étant mis en oeuvre entre un contour externe de la portion tubulaire inférieure dudit corps et un contour interne de la portion tubulaire supérieure du carter. Selon cette réalisation, la noix d'entraînement comprend un élément tubulaire qui est monté en liaison pivot selon l'axe de rotation à l'intérieur d'un alésage agencé sur la portion tubulaire inférieure du corps du palier de roulement. De préférence, ledit alésage comprend un fond venant en appui contre une extrémité supérieure de cet élément tubulaire lorsque le corps du palier de roulement est en prise avec le carter ; ainsi, la roue dentée et la noix d'entraînement sont immobilisées en translation selon l'axe de rotation grâce au carter et au palier de roulement assemblé l'un avec l'autre.

Selon une réalisation de l'appareil objet de l'invention, le carter comprend un fond muni d'un plot cylindrique. En outre, la noix d'entraînement comprend un logement cylindrique s'engageant sur le plot cylindrique pour un montage en liaison pivot selon l'axe de rotation de la noix d'entraînement et de la roue dentée vis-à-vis du carter.

Selon une réalisation de l'appareil, un système de positionnement est agencé entre le carter et le fond de la cuve pour orienter le carter autour de l'axe de rotation dans une position définie. Cela présente pour avantage d'assurer un engrènement précis de la roue dentée avec le pignon denté lors de l'insertion de la cuve dans l'enceinte de cuisson. Cela présente également pour avantage de participer au blocage en rotation selon l'axe de rotation, du carter par rapport au fond de la cuve, en complément du joint d'étanchéité comprimé entre le fond de la cuve et le disque du corps du palier de roulement, et aussi en complément de la pression exercée par le carter et le corps du palier de roulement, de part et d'autre dudit fond de la cuve, grâce au système d'assemblage qui assure le maintien en prise du carter avec le corps du palier de roulement en exerçant ladite pression de part et d'autre du fond de la cuve. De préférence, selon cette réalisation, le système de positionnement comprend une platine agencée sur le carter et munie d'au moins un orifice, de préférence trois orifices. En outre, le système de positionnement comprend au moins un téton agencé sous le fond de la cuve, de préférence trois tétons, ledit au moins un téton s'engageant dans ledit au moins un orifice lors de la mise en place du carter sous le fond de la cuve selon ladite position définie.

Selon l'appareil objet de l'invention, le carter comprend un contour muni d'une fenêtre permettant le passage d'une partie de la roue dentée pour son engrènement avec le pignon denté lors de la mise en place de la cuve dans l'enceinte de cuisson.

Selon l'invention, l'appareil comprend un bouchon amovible configuré pour être placé en lieu et place du palier de roulement lorsque ce dernier est retiré de la cuve. Le bouchon est configuré pour traverser la première ouverture centrale en prenant appui contre le dessus du fond de la cuve et pour venir en prise avec le carter grâce à un second système d'assemblage identique au premier système d'assemblage décrit précédemment, de sorte que le carter et le bouchon demeurent pressés de part et d'autre contre le fond de la cuve. Cette mise en oeuvre permet d'utiliser la cuve sans le palier de roulement et sans l'accessoire, en mettant en place le bouchon dans le fond de la cuve. Cela permettra de placer des aliments dans la cuve disposant d'un fond sensiblement plat sur toute sa surface.

Selon une réalisation préférentielle de l'invention, l'appareil comprend un premier dispositif de chauffe permettant de chauffer la cuve de réception d'aliments par conduction thermique lorsque ladite cuve est placée dans l'enceinte de cuisson. Cela permettra de chauffer des liquides disposés dans la cuve, par exemple de l'eau.

Selon une réalisation préférentielle de l'invention, l'appareil est un appareil de cuisson à air chaud qui comprend un second dispositif de chauffe permettant de chauffer de l'air et un dispositif de circulation permettant une circulation de l'air chauffé dans la cuve de réception d'aliments lorsqu'elle est placée dans l'enceinte de cuisson.

Ainsi, les modes de cuisson peuvent être étendus grâce à l'appareil selon l'invention qui présente les caractéristiques d'un appareil de cuisson à air chaud traditionnel, avec en complément un dispositif de chauffe de la cuve par conduction thermique. Dans le cadre de l'invention portant avant tout sur le montage et démontage rapide du système d'entraînement sur la cuve, des variantes de l'appareil de cuisson pourraient comprendre uniquement le premier dispositif de chauffe de la cuve par conduction thermique ou uniquement le second dispositif de chauffe de l'air et le dispositif de circulation de l'air.

Selon ce mode préférentiel de l'invention combinant différents modes de chauffe de la cuve lorsqu'elle est placée dans l'enceinte de cuisson, l'appareil de cuisson comprend un circuit de commande agencé pour contrôler le premier dispositif de chauffe de la cuve par conduction thermique, une fois la cuve placée dans l'enceinte de cuisson et en fonction du mode de préparation culinaire sélectionné par l'utilisateur. Ce circuit de commande contrôle également le second dispositif de chauffe de l'air et le dispositif de circulation de l'air chauffé, une fois la cuve placée dans l'enceinte de cuisson et en fonction du mode de préparation culinaire sélectionné par l'utilisateur. Ce circuit de commande contrôle également le dispositif motorisé entraînant en rotation le pignon denté.

Selon l'invention, l'appareil comprend un accessoire de cuisine constitué d'une pale de brassage. D'autres accessoires de cuisine pourraient être envisagés, par exemple des couteaux pour hacher ou mixer des aliments dans la cuve, voire un malaxeur.

Selon une réalisation de l'appareil de cuisson, le corps comprend une base et un tiroir monté de manière amovible sur la base entre une position engagée où l'enceinte de cuisson est fermée et une position dégagée où l'enceinte de cuisson est ouverte, la cuve étant assujettie au tiroir. Une variante de réalisation de l'appareil de cuisson pourrait être envisagée, selon laquelle le corps comporterait un couvercle permettant de venir loger la cuve dans l'enceinte de cuisson, avec ou sans le panier, la fermeture du couvercle permettant la fermeture de l'enceinte de cuisson.

De préférence, l'appareil de cuisson comprend un panier amovible configuré pour être placé dans la cuve et retiré de celle-ci. Ce panier pourra être placé dans la cuve en lieu et place du plateau. Ce panier pourrait aussi être placé sur le plateau lui-même placé dans la cuve.

L'invention concerne également un procédé de mise en place d'un accessoire de cuisine sur une cuve d'un appareil de cuisson présentant l'une et ou l'autre des caractéristiques précitées. Le procédé comprend les étapes suivantes :
- positionnement de la roue dentée et de la noix d'entraînement, assujetties entre elles, à l'intérieur du carter,
- positionnement du carter en appui contre le dessous du fond de la cuve, dans une position définie garantissant l'engrènement de la roue dentée avec le pignon denté lors de la mise en place de la cuve dans l'enceinte de cuisson, la noix d'entraînement communiquant avec le volume intérieur de la cuve au travers de la première ouverture centrale sur le fond de la cuve,
- positionnement du palier de roulement dans le volume intérieur de la cuve et introduction du corps du palier de roulement au travers de la première ouverture centrale jusqu'à ce que ledit corps vienne en appui contre le dessus du fond de la cuve,
- mise en place du premier système d'assemblage pour fixer le carter avec le corps du palier de roulement qui pressent de part et d'autre contre le fond de la cuve,
- positionnement de l'accessoire de cuisine sur le tube du palier de roulement, ledit accessoire de cuisine venant engrener avec la noix d'entraînement.

Selon ce procédé, lorsque l'appareil comprend un plateau tel que précité, ledit procédé comprend préalablement au positionnement de l'accessoire de cuisine sur le tube du palier de roulement, une étape de positionnement du plateau dans le volume intérieur de la cuve en introduisant le tube par la seconde ouverture centrale dudit plateau puis une étape de mise en place des moyens de blocage entre ledit plateau et le corps du palier de roulement.

Selon ce procédé, en la présence du joint d'étanchéité, une étape préalable au positionnement du carter consiste à positionner ledit joint d'étanchéité autour de la première ouverture centrale, sur le dessus du fond de la cuve.

Le procédé suivant ne relève pas de l'invention et n'est présenté qu'à titre illustratif. Un tel procédé concerne la mise en place d'un bouchon sur le fond d'une cuve d'un appareil présentant les caractéristiques objet de l'invention et un bouchon tel que précité. Le procédé comprend au moins les étapes suivantes :
- retrait du système d'assemblage entre le corps du palier de roulement et le carter, puis dégagement du palier de roulement hors de la cuve en maintenant le carter en appui contre le dessous de la cuve,
- positionnement du bouchon dans le volume intérieur de la cuve et introduction du bouchon au travers de la première ouverture centrale jusqu'à ce que ledit bouchon vienne en appui contre le dessus du fond de la cuve,
- mise en place du second système d'assemblage pour fixer le carter avec le bouchon qui pressent de part et d'autre contre le fond de la cuve.

Selon une réalisation de ce procédé ne relevant pas de l'invention, celui-ci comprend préalablement au positionnement du bouchon, une étape de retrait de la roue dentée et de la noix d'entraînement hors du carter. Cette étape sera mise en oeuvre lorsque la noix d'entraînement pénètre dans le volume intérieur de la cuve en passant par la première ouverture centrale. En effet, le retrait de la roue dentée et de la noix d'entraînement est dans ce cas nécessaire pour pouvoir mettre en place le bouchon. Cette étape complémentaire ne sera pas nécessaire lorsque la noix d'entraînement sera conçue pour que son extrémité supérieure demeure en-dessous du fond du carter, disposée en regard de la première ouverture pour communiquer avec le volume intérieur de la cuve, afin d'assurer son embrayage avec l'accessoire de cuisine lors de sa mise en place dans la cuve. Cette étape de retrait de la roue dentée et de la noix d'entraînement pourra éventuellement être précédée d'une étape de dégagement du carter du dessous du fond de la cuve, puis suivie d'une étape de repositionnement du carter vide en appui contre le dessous du fond de la cuve, avec une position définie. On pourra cependant envisager de retirer la noix d'entraînement et la roue dentée en les passant au travers de la première ouverture centrale sur le fond de la cuve, depuis le volume intérieur de cette cuve, lorsque le diamètre de cette première ouverture centrale est suffisamment grand pour y passer la noix d'entraînement et la roue dentée.

### Brève description des figures

Les caractéristiques et avantages de l'invention apparaîtront à la lecture de la description suivante s'appuyant sur des figures, parmi lesquelles :
[Fig. 1] La figure 1 illustre une vue en coupe d'un appareil de cuisson à air chaud selon l'invention ;
[Fig. 2] La figure 2 illustre une vue de face du corps de l'appareil de cuisson à air chaud de la figure 1, sans le tiroir de cet appareil, selon un premier mode de réalisation ;
[Fig. 3] La figure 3 illustre selon un angle de vue de dessous le tiroir de l'appareil de cuisson à air chaud de la figure 1, ledit tiroir intégrant la cuve et étant prévu pour être inséré dans le corps de l'appareil illustré en figure 2 ;
[Fig. 4] La figure 4 illustre une vue en coupe mettant en évidence l'engrènement de la roue dentée et du pignon denté, ainsi que la connexion électrique et mécanique d'un dispositif de chauffe par conduction thermique présent sur la cuve de la figure 3 et le corps de la figure 2 ;
[Fig. 5] La figure 5 illustre selon un premier angle de vue une réalisation du carter présent sur la cuve ;
[Fig. 6] La figure 6 illustre selon un deuxième angle de vue le carter de la figure 5 ;
[Fig. 7] La figure 7 illustre selon un premier angle de vue une réalisation de la roue dentée et de la noix d'entraînement, présentes sur la cuve ;
[Fig. 8] La figure 8 illustre selon un deuxième angle de vue la roue dentée et la noix d'entraînement de la figure 7 ;
[Fig. 9] La figure 9 illustre selon un premier angle de vue une réalisation du palier de roulement présent dans la cuve ;
[Fig. 10] La figure 10 illustre selon un deuxième angle de vue le palier de roulement de la figure 9 ;
[Fig. 11] La figure 11 illustre en coupe une réalisation du fond de la cuve ;
[Fig. 12] La figure 12 illustre une réalisation d'un accessoire de cuisine du type pale de brassage ;
[Fig. 13] La figure 13 illustre une réalisation d'un joint d'étanchéité présent sur la cuve ;
[Fig. 14] La figure 14 illustre une réalisation d'un plateau conçu pour être positionné dans la cuve ;
[Fig. 15] La figure 15 illustre en coupe, en vue agrandie, le système d'entraînement monté sur le fond de la cuve ;
[Fig. 16] La figure 16 illustre en coupe, en vue agrandie, le système d'entraînement de la figure 15, avec l'accessoire de cuisine de la figure 12 monté sur le palier de roulement ;
[Fig. 17] La figure 17 illustre une réalisation d'un bouchon monté en lieu et place du palier de roulement, ledit bouchon étant assemblé avec le carter sur le fond de la cuve ;
[Fig. 18] La figure 18 illustre une vue agrandie de la figure 17 ;
[Fig. 19] La figure 19 illustre une variante du dispositif de chauffe de la cuve par conduction thermique sur l'appareil de cuisson, comparée à celle mise en oeuvre en regard des figures 1 à 3.

### Description détaillée de l'invention

Dans la suite de la description, le terme appareil est utilisé pour désigner l'appareil de cuisson selon l'invention.

Les termes « supérieur », « inférieur », « haut », « bas », « avant », « arrière », « latéral », « vertical », « horizontal », qui pourraient être utilisés dans la présente description, le seront en considération de la position normale de l'appareil placé dans une configuration fonctionnelle, face à l'utilisateur et reposant sur un plan de cuisine.

En outre, les mêmes références seront utilisées dans la suite de la description pour définir les mêmes caractéristiques ou leurs équivalents selon les différentes variantes de conception de l'appareil objet de l'invention, sauf indication dans le texte.

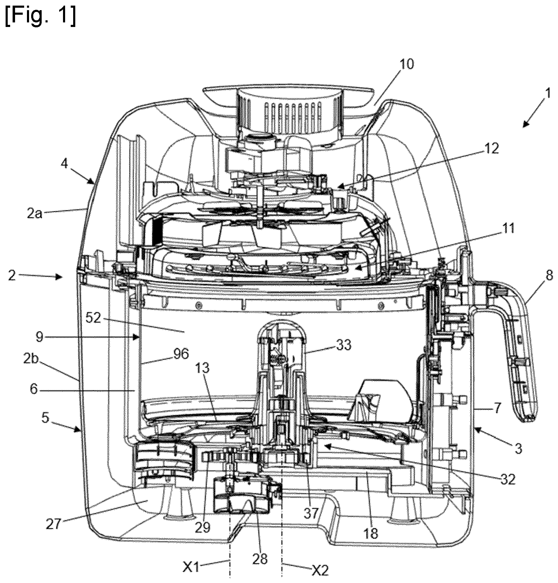

En regard des figures 1 à 3, l'appareil 1 comprend un corps 2 et un tiroir 3. Le tiroir 3 est amovible du corps 2. Le corps 2 comprend dans sa partie supérieure 2a un bloc de chauffe 4 et dans sa partie inférieure 2b une base 5. A l'intérieur de cette base 5 est définie une enceinte de cuisson 6. Le tiroir 3 comprend une façade 7, une poignée de manipulation 8 et une cuve 9 permettant la réception des aliments à cuire ; lorsque le tiroir 3 est placé sur la base 5 du corps 2, la cuve 9 est logée dans l'enceinte de cuisson 6 qui est fermée grâce à la façade 7. L'extraction du tiroir 3 s'effectue en le tirant vers l'avant par rapport au corps 2, ce qui permet de dégager la cuve 9 de l'enceinte de cuisson 6. Le bloc de chauffe 4 permet de faire circuler de l'air chaud vers le bas en direction de l'enceinte de cuisson 6 de sorte que lorsque le tiroir 3 est placé sur la base 5 du corps 2, cet air chaud circule dans l'enceinte de cuisson 6 et dans la cuve 9. Le bloc de chauffe 4 comprend une entrée d'air 10, un dispositif de chauffe 11 du type résistif qui permet de chauffer l'air circulant et un dispositif de circulation 12 du type ventilateur qui permet de faire circuler l'air et de le propulser jusque dans l'enceinte de cuisson 6 en passant au préalable par ledit dispositif de chauffe 11 de l'air. L'appareil 1 comprend en outre un circuit de commande (non illustré) qui permet de contrôler le dispositif de chauffe 11 et le dispositif de circulation 12 lorsque le tiroir 3 est placé sur la base 5 du corps 2 et en fonction du programme de cuisson sélectionné sur un clavier de sélection (non illustré) agencé sur ledit corps 2. De telles caractéristiques existent déjà traditionnellement sur les appareils de cuisson à air chaud du type friteuse à air chaud ; l'homme du métier pourra s'y référer pour la mise en oeuvre de l'appareil 1 selon l'invention.

Avantageusement, l'appareil 1 mise en oeuvre selon ce mode préférentiel de conception peut aussi permettre de chauffer par conduction thermique la cuve 9 lorsque celle-ci est placée dans l'enceinte de cuisson 6, ce qui permet d'étendre les fonctions de cet appareil 1, en réalisant par exemple des cuissons de liquides contenus dans la cuve 9, voire des cuissons vapeurs en plaçant dans cette cuve 9 un panier (non illustré) ou un plateau (décrit ensuite) et de l'eau dans un fond 13 de la cuve 9, le panier ou le plateau étant placé de manière amovible dans la cuve 9 et recevant des aliments à cuire. La présence d'un tel panier amovible est déjà connue sur les appareils de cuisson à air chaud traditionnels. Différentes conceptions de l'appareil 1 sont envisageables pour la mise en oeuvre de cette chauffe de la cuve 9 par conduction thermique.

Selon un premier mode de conception de l'appareil 1, illustré notamment en regard des figures 1 à 4, un dispositif additionnel de chauffe 14 est fixé sous le fond 13 de la cuve 9 et assure la chauffe de la cuve 9 par conduction thermique. La fixation du dispositif additionnel de chauffe 14 sous le fond 13 de la cuve 9 est réalisée par exemple par sertissage ou par soudage ; on pourrait aussi prévoir des brides de fixation (non illustrées). De préférence, le dispositif additionnel de chauffe 14 est directement en contact avec le fond 13 de la cuve 9, selon ce premier mode de conception, mais on pourrait envisager une variante selon laquelle un léger espacement serait préservé entre le dispositif additionnel de chauffe 14 et le fond 13 de la cuve 9, grâce à des brides de fixation adaptées.

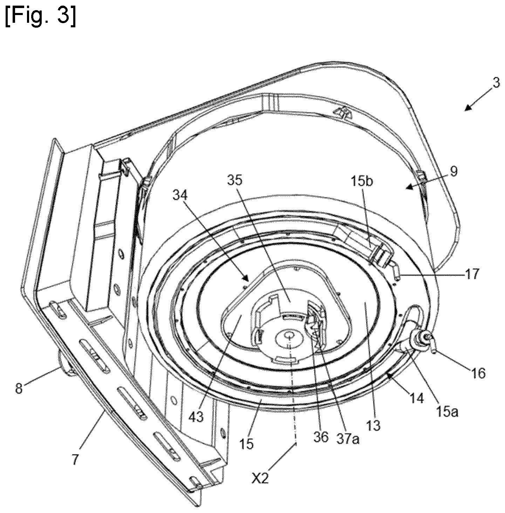

Selon ce premier mode de conception de l'appareil 1, le dispositif additionnel de chauffe 14 comprend un organe électrique résistif 15 qui présente une forme circulaire ouverte avec deux extrémités 15a, 15b qui sont courbées vers le bas, comme l'illustre la figure 3. Ces deux extrémités 15a, 15b comprennent chacune une broche conductrice 16, 17. L'enceinte de cuisson 6 du corps 2 présente un fond 18 qui comprend deux rainures 19, 20 qui sont agencées en correspondance avec les deux extrémités 15a, 15b de l'organe électrique résistif 15 de sorte que les deux broches conductrices 16, 17 s'engagent respectivement dans ces deux rainures 19, 20 lorsque la cuve 9 est engagée dans l'enceinte de cuisson 6, lors de la mise en place du tiroir 3 sur le corps 2. Les extrémités arrière 19a, 20a des rainures 19, 20 comprennent chacune un connecteur conducteur 21, 22 à lamelles flexibles et conductrices. Lorsque le tiroir 3 est convenablement placé sur la base 5 du corps 2, sa façade 7 fermant l'enceinte de cuisson 6, les deux broches conductrices 16, 17 viennent respectivement s'embrocher sur les connecteurs conducteurs 21, 22 par pincement entre leurs deux lamelles. Ces deux connecteurs conducteurs 21, 22 sont raccordés au circuit de commande de l'appareil 1 ; ainsi, le circuit de commande permet également le contrôle de dispositif additionnel de chauffe 14 lorsque le tiroir 3 est placé sur la base 5 et en fonction de programme de cuisson sélectionné par l'utilisateur sur le clavier de sélection.

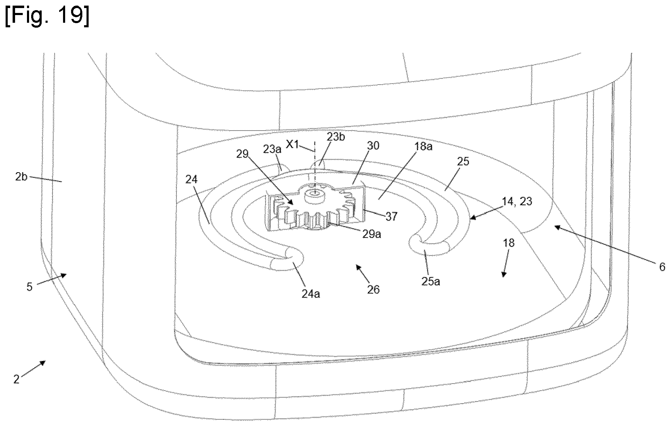

Selon un deuxième mode de conception de l'appareil 1, illustré en regard de la figure 19, le dispositif additionnel de chauffe 14 n'est plus agencé sous le fond 13 de la cuve 9 comme dans le cas du premier mode de conception précité, mais au-dessus du fond 18 de l'enceinte de cuisson 6. Le dispositif additionnel de chauffe 14 comprend un organe électrique résistif 23 agencé en serpentin de manière à former deux fourches circulaires 24, 25 dont les extrémités 24a, 25a sont écartées l'une de l'autre et définissent un passage 26. Lorsque le tiroir 3 est placé sur la base 5 du corps 2, le fond 13 de la cuve 9 est positionné avec un léger espacement au-dessus de l'organe électrique résistif 23, ce qui permet aussi de chauffer par conduction thermique le fond 13 de la cuve 9. Les deux extrémités 23a, 23b de l'organe électrique résistif 23 sont connectées au circuit de commande qui permet de contrôler l'activation dudit organe électrique résistif 23 lorsque le tiroir 3 est placé sur la base 5 et en fonction du programme de cuisson sélectionné par l'utilisateur.

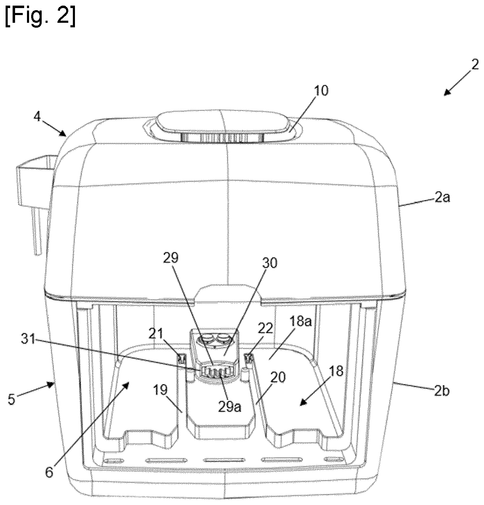

En regard des figures 1 et 2, pour le premier mode de conception précité, la base 5 du corps 2 comprend un compartiment 27 agencé sous le fond 18 de l'enceinte de cuisson 6. Ce compartiment 27 permet notamment d'y loger un moteur électrique 28 permettant l'entraînement en rotation selon un axe vertical X1 d'un pignon denté 29. Les rainures 19, 20 sur le fond 18 de l'enceinte de cuisson 6 sont également placées dans l'épaisseur de ce compartiment 27, le moteur électrique 28 et le pignon denté 29 étant positionnés entre ces deux rainures 20, 21. Le moteur électrique 28 est contrôlé par le circuit de commande en fonction du programme de cuisson sélectionné par l'utilisateur. Le fond 18 de l'enceinte de cuisson 6 comprend dans sa partie arrière 18a, entre les deux rainures 19, 20, et au niveau des deux connecteurs conducteurs 21, 22, un logement 30 agencé en protubérance par rapport audit fond 18, le logement 30 recevant le pignon denté 29. Ce logement 30 présente à l'avant une fenêtre 31, par laquelle dépasse légèrement une partie avant 29a du pignon denté 29 de sorte qu'il communique avec l'enceinte de cuisson 6. De manière similaire à ce qui précède, sur le deuxième mode de conception de la figure 19, on retrouve dans la partie arrière 18a du fond 18 de l'enceinte de cuisson 6, le logement 30 recevant le pignon denté 29 avec sa partie avant 29a qui dépasse légèrement de la fenêtre 31. Selon cette deuxième conception, l'organe électrique résistif 23 est positionné autour du logement 30 de sorte que la partie avant 29a du pignon denté 29 soit accessible en passant par le passage 26 laissé entre les deux extrémités 24a, 25a des fourches 24, 25 dudit organe électrique résistif 23.

La description qui suit porte sur un système d'entraînement 32 d'un accessoire de cuisine 33, mis en oeuvre sur la cuve 9. Ce système d'entraînement 32 sera mis en oeuvre tant pour la cuve 9 illustrée en figure 3 et adaptée au corps 2 de l'appareil 1 illustré en figure 2, que pour la cuve adaptée au corps 2 de l'appareil 1 illustré en figure 19.

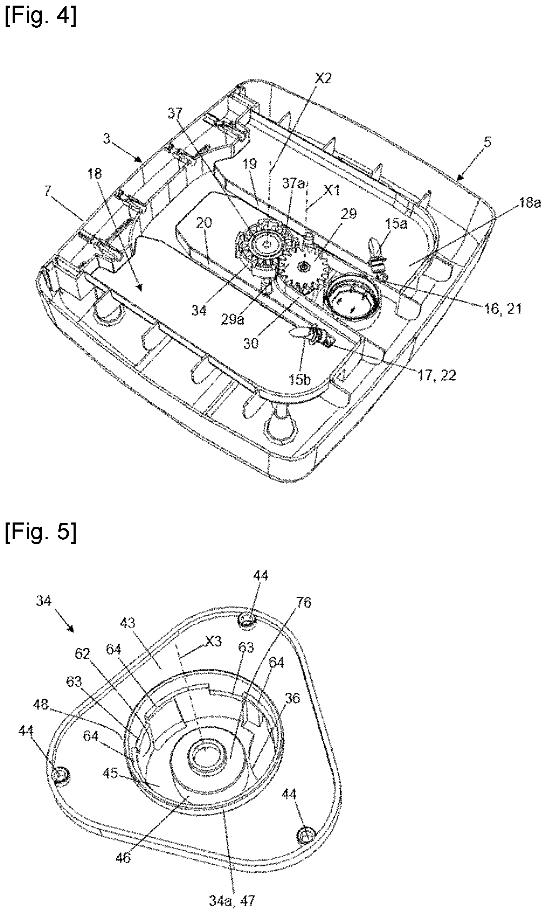

En regard des figures 1 et 3 à 6, la cuve 9 comprend sous la partie centrale de son fond 13 un carter 34 qui comprend à l'arrière de son contour 35 une fenêtre 36. Une roue dentée 37 est montée en rotation selon un axe X2 perpendiculaire au fond 13 de la cuve 9, cet axe X2 étant parallèle à l'axe vertical X1 lorsque le tiroir 3 est placé sur la base 5 du corps 2. Cette roue dentée 37 est logée dans le carter 38 et a sa partie arrière 37a qui dépasse légèrement de la fenêtre 36. Lorsque le tiroir 3 est convenablement placé sur la base 5, l'enceintre de cuisson 6 étant fermée, la partie arrière 37a de la roue dentée 37 vient engrener avec la partie avant 29a du pignon 29, comme le montre la figure 4. L'actionnement du moteur électrique 28 permet ainsi d'entraîner en rotation la roue dentée 37 selon l'axe de rotation X2. Sur le mode de conception illustré en figure 3, l'organe électrique résistif 15 est agencé autour du carter 34 sous le fond 13 de la cuve 9, sensiblement à la périphérie dudit fond 13, les deux broches conductrices 16, 17 étant disposées à l'arrière de la cuve 9, dans le prolongement de la fenêtre 36 du carter 34. Sur le mode de conception illustré en figure 19, le passage 26 laissé entre les deux extrémités 24a, 25a des fourches 24, 25 de l'organe électrique résistif 23 est dimensionné pour permettre l'introduction du carter 34 entre lesdites extrémités 24a, 25a, en sorte de venir engrener la roue dentée 37 avec le pignon denté 29.

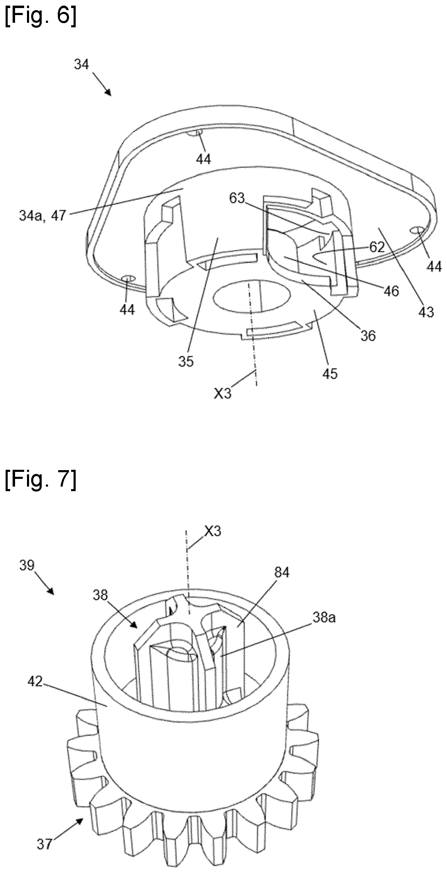

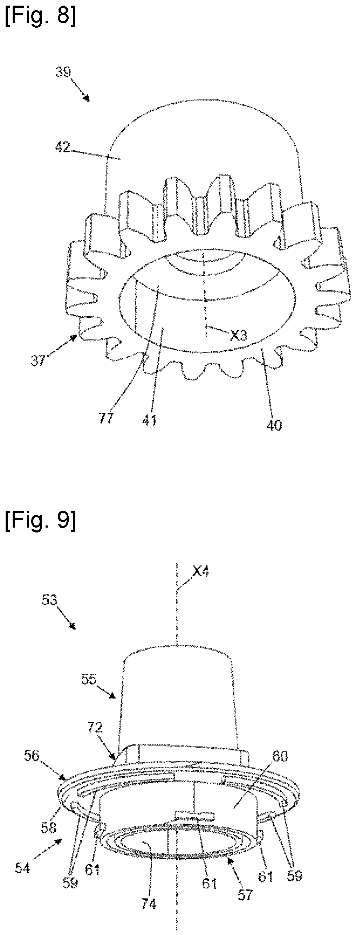

En regard des figures 7 et 8, la roue dentée 37 est assujettie à une noix d'entraînement 38, celles-ci formant une pièce monobloc 39. Cette pièce monobloc 39 comprend sur sa face inférieure 40 un logement cylindrique 41. Cette pièce monobloc 39 comprend également un élément tubulaire 42 qui s'étend vers le haut au-dessus de la roue dentée 37, la noix d'entraînement 38 étant logée à l'intérieur de cet élément tubulaire 42 et dépassant vers le haut vis-à-vis de celui-ci.

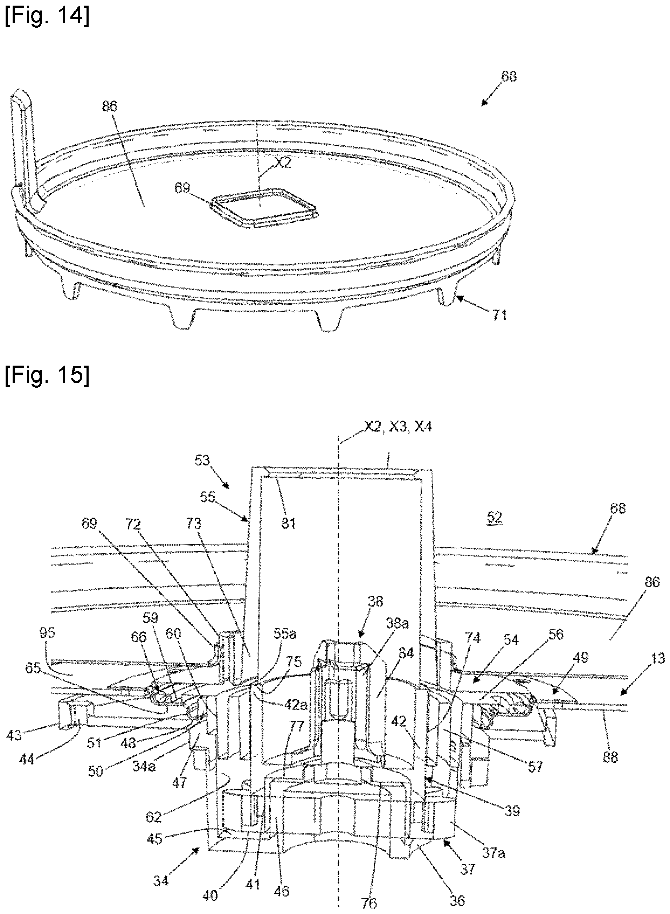

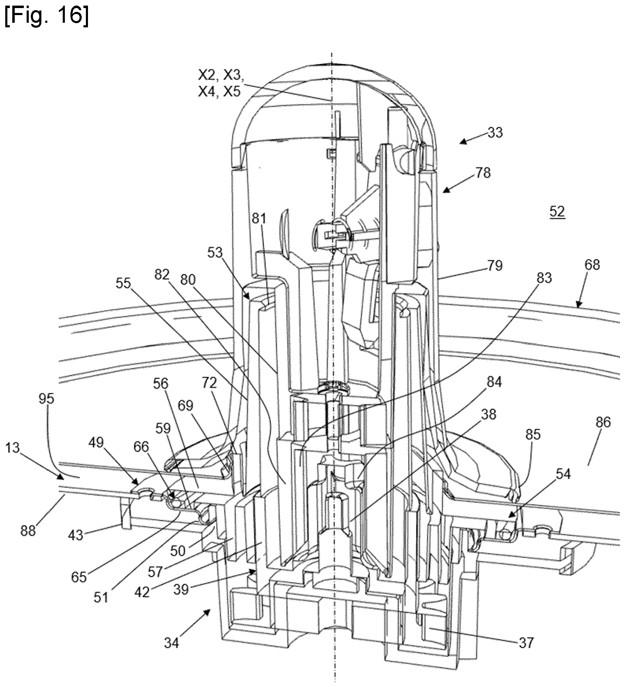

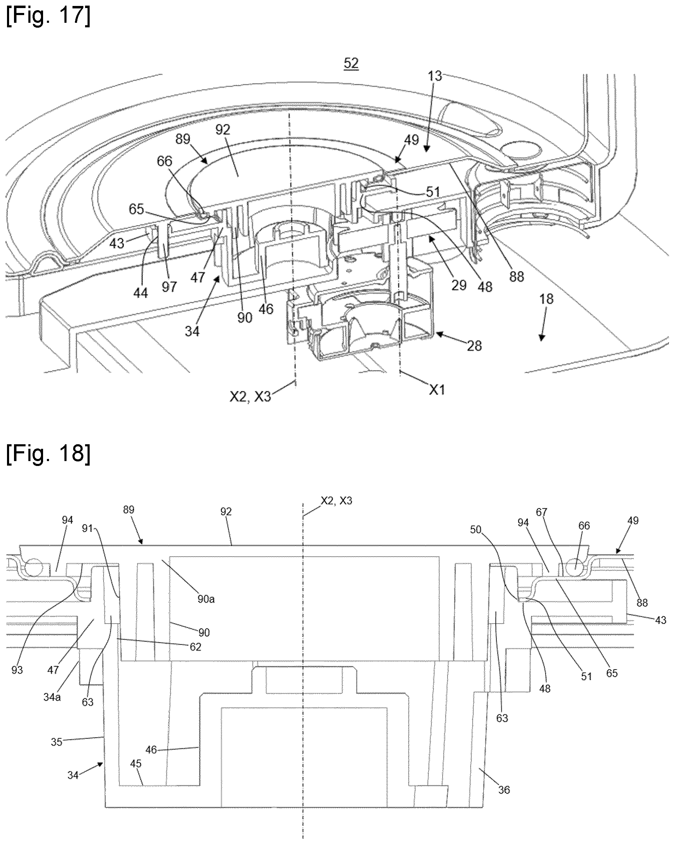

En regard des figures 5 et 6, le carter 34 comprend dans sa partie supérieure 34a une platine 43 de forme sensiblement triangulaire qui comprend trois orifices 44 agencés respectivement dans les trois coins de la platine 43. Ces trois orifices 44 sont destinés à recevoir respectivement trois tétons 97 (dont un est illustré sur la figure 17) agencé sous le fond 13 de la cuve 9, lorsque le carter 34 est plaqué contre le dessous dudit fond 13 de la cuve 9. Ces orifices 44 et ces tétons 97 assurent un positionnement précis du carter 34 sous le fond 13 de la cuve 9, c'est-à-dire avec une orientation définie autour du second axe de rotation X2, ce qui garantit un positionnement convenable de la roue dentée 37 en regard du pignon denté 29 lorsque la cuve 9 est placée dans l'enceinte de cuisson 6. Le fond 45 du carter 34 comprend un plot cylindrique 46 qui s'étend vers le haut et qui reçoit le logement cylindrique 41 de la pièce monobloc 39 lorsque celle-ci est placée dans le carter 34, comme le montrent les figures 15 et 16, ce qui assure un montage en liaison pivot de la roue dentée 37 et de la noix d'entraînement 38 selon l'axe de rotation X3 dudit plot cylindrique 46, ledit axe de rotation X3 étant confondu avec l'axe de rotation X2 sur le fond 13 de la cuve 9, lorsque le carter 34 est convenablement positionné sous ledit fond 13 de la cuve 9.

En regard des figures 5, 11, 15 et 16, le carter 34 comprend une portion tubulaire supérieure 47 munie d'un épaulement externe 48, la platine 43 étant positionnée au niveau de cet épaulement externe 48. Le fond 13 de la cuve 9 comprend une pièce d'insert 49 de forme annulaire munie d'une ouverture centrale 50 de forme cylindrique ayant pour axe le second axe de rotation X2. Lorsque le carter 34 est placé sous le fond 13 de la cuve 9, sa portion tubulaire supérieure 47 s'emboîte dans l'ouverture centrale 50 et l'épaulement externe 48 vient en appui contre un rebord 51 présent sur la pièce d'insert 49, ce rebord 51 définissant ladite ouverture centrale 50. Dans cette position, la noix d'entraînement 38 s'étend vers le haut selon l'axe X2 et traverse l'ouverture centrale 50, la portion d'extrémité supérieure 38a de cette noix d'entraînement 38 venant se placer dans le volume intérieur 52 de la cuve 9.

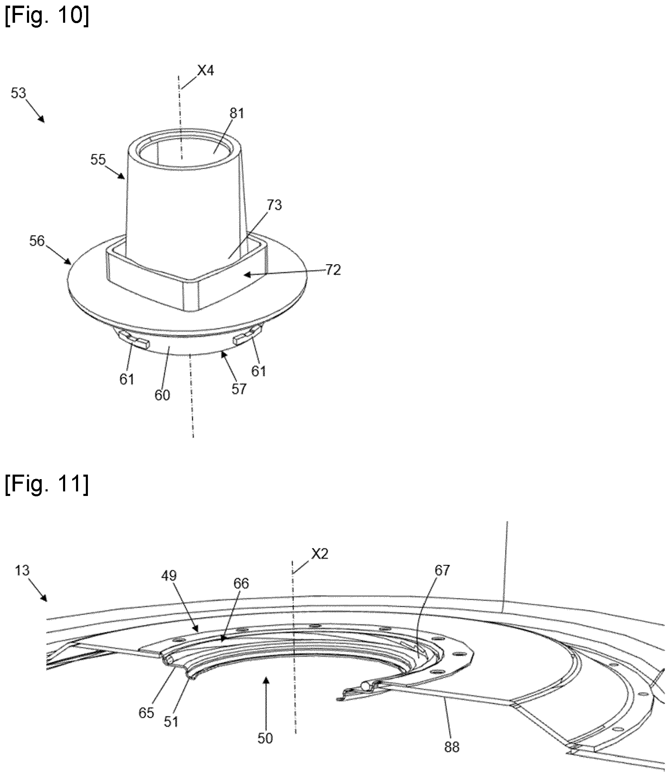

En regard des figures 5, 6, 9, 10 et 15, la cuve 9 comprend un palier de roulement 53 qui présente un axe longitudinal X4 confondu avec l'axe de rotation X2 lorsque ledit palier de roulement 53 est monté sur le fond 13 de la cuve 9. Ce palier de roulement 53 comprend un corps 54 et un tube 55 prolongeant vers le haut ledit corps 54, selon l'axe longitudinal X4. Le corps 54 comprend un disque 56 et une portion tubulaire inférieure 57 qui s'étend vers le bas depuis ledit disque 56, selon l'axe longitudinal X4. Le disque 56 présente sur sa face inférieure 58 quatre éléments protubérants 59 de forme circulaire, espacés entre eux et disposés autour de la portion tubulaire inférieure 57, comme le montrent les figures 9 et 10. La portion tubulaire inférieure 57 comprend sur son contour externe 60 quatre pattes 61 de forme circulaire et uniformément réparties autour de ladite portion tubulaire inférieure 57. La portion tubulaire supérieure 47 du carter 34 comprend sur son contour interne 62 quatre encoches 63 de forme circulaire et uniformément réparties autour de ladite portion tubulaire supérieure 47. Les quatre pattes 61 et les quatre encoches 63 permettent de réaliser un système d'assemblage à baïonnette entre la portion tubulaire inférieure 57 du corps 54 du palier de roulement 53 et la portion tubulaire supérieure 47 du carter 34, en introduisant la portion tubulaire inférieure 57 dans la portion tubulaire supérieure 47 pour engager les pattes 61 dans les encoches 63 respectives, puis en effectuant une rotation du palier de roulement 53 vis-à-vis du carter 34, selon l'axe de rotation X2 lorsque lesdits éléments sont positionnés sur le fond 13 de la cuve 9, ce qui permet de déplacer lesdites pattes 61 sous des butées circulaires 64 disposées dans la continuités desdites encoches 63 sur le contour interne 62 de ladite portion tubulaire supérieure 47, afin de maintenir en prise le corps 54 du palier de roulement 53 avec le carter 34. Les pattes 61, les encoches 63 et les butées circulaires 64 forment ainsi un système à baïonnette.

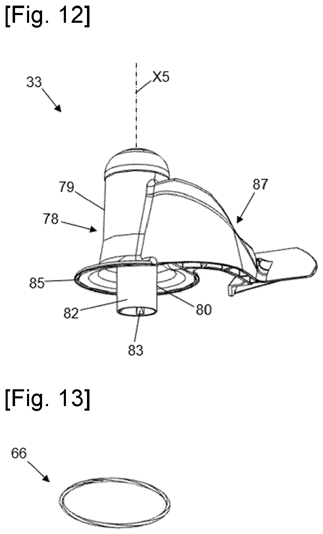

En regard des figures 9 à 11, 13 et 15, la pièce d'insert 49 sur le fond 13 de la cuve 9 comprend une partie épaulée formant une cavité aplatie 65 annulaire à la périphérie du rebord 51 qui délimite l'ouverture centrale 50 sur ledit fond 13 de la cuve 9. Cette cavité aplatie 65 permet la réception d'un joint d'étanchéité 66 qui, de préférence, est un joint torique. Ce joint d'étanchéité 66 est positionné entre la face supérieure 67 de la cavité aplatie 65 et la face inférieure 58 du disque 56 présent sur le corps 54 du palier de roulement 53. Ce joint d'étanchéité 66 est positionné autour des éléments protubérants 59 sous la face inférieure 58 dudit disque 56, lesquels viennent en appui contre la face supérieure 67 de la cavité aplatie 65, ce qui limite la compression du joint d'étanchéité 66 qui est écrasé entre la cavité aplatie 65 et le disque 56 lorsque le corps 54 du palier de roulement 53 est assemblé avec le carter 34 grâce au système d'assemblage à baïonnette, tel que décrit précédemment.

En regard des figures 1, 9, 10, 14 et 15, la cuve 9 comprend un plateau 68 qui est amovible et vient se positionner dans le volume intérieur 52 de la cuve 9. Ce plateau 68 comprend une ouverture centrale 69 qui présente une forme carrée. Le plateau 68 comprend sous sa face inférieure 70 un piètement 71 qui prend appui sur le fond 13 de la cuve 9. Le corps 54 du palier de roulement 53 comprend un élément de contour 72 qui s'étend vers le haut au-dessus du disque 56 et est positionné autour de la portion d'extrémité inférieure 73 du tube 55. Cet élément de contour 72 présente une section en coupe transversale de forme carrée dimensionnée pour s'engager dans l'ouverture centrale 69 ayant une forme carrée complémentaire. Cela permet de bloquer la rotation du plateau 68 autour de l'axe de rotation X2 lors de son positionnement dans le volume intérieur 52 de la cuve 9. Lors de la mise en place du plateau 68, son ouverture centrale 69 est introduite dans le tube 55 du palier de roulement 53 jusqu'à ce que le piètement 71 vienne reposer sur le fond 13 de la cuve 9, position dans laquelle ladite ouverture centrale 69 s'engage autour dudit élément de contour 72.

En regard des figures 5 à 10 et 15, la portion tubulaire inférieure 57 du corps 54 du palier de roulement 53 comprend un alésage 74 dont le fond 75 est constitué par l'extrémité inférieure 55a du tube 55 dudit palier de roulement 53. Cet alésage 74 reçoit en rotation selon l'axe de rotation X2, l'élément tubulaire 42 de la pièce monobloc 39, l'extrémité supérieure 42a de cet élément tubulaire 42 venant en butée contre l'extrémité inférieure 55a du tube 55 lorsque ledit corps 54 est en prise avec le carter 34. Ainsi la pièce monobloc 39 est montée en rotation selon l'axe X2, avec le carter 34 grâce au plot cylindrique 46 dans le fond 45 du carter 34 et au logement cylindrique 41 sur ladite pièce monobloc 39, d'une part, et grâce à l'alésage 74 et à l'élément tubulaire 42, d'autre part. En outre, la pièce monobloc 39 est bloquée en translation selon l'axe de rotation X2 entre la face supérieure 76 du plot cylindrique 46 sur laquelle prend appui sur le fond 77 du logement cylindrique 41, d'une part, et l'extrémité inférieure 55a du tube 55 sur laquelle prend appui l'extrémité supérieure 42a de l'élément tubulaire 42. Lorsque le palier de roulement 53 et le carter 34 sont en position assemblée sur le fond 13 de la cuve 9, la partie d'extrémité supérieure 38a de la noix d'entraînement 38 est positionnée au-dessus dudit fond 13, dans le volume intérieur 52 de la cuve 9, comme le montre la figure 15.

En regard des figures 7, 10, 12 et 16, notamment, l'appareil 1 comprend un accessoire de cuisine 33 du type pale de brassage. Cet accessoire de cuisine 33 comprend un corps 78 qui s'étend selon un axe longitudinal X5 confondu avec l'axe de rotation X2 lorsque ledit accessoire de cuisine 33 est inséré sur le tube 55 du palier de roulement 53. Le corps 78 comprend une cloche externe 79 et un tube interne 80. Le tube interne 80 traverse le tube 55 du palier de roulement 53 en passant par son ouverture supérieure 81, la portion d'extrémité inférieure 82 du tube interne 80 venant se loger dans l'élément tubulaire 42 de la pièce monobloc 39, lui-même inséré dans la portion tubulaire inférieure 57 du corps 54 du palier de roulement 53, de sorte que ladite portion d'extrémité inférieure 82 vienne embrayer avec la noix d'entraînement 38. Cette portion d'extrémité inférieure 82 comprend des cannelures internes 83 qui sont en prise avec des dents 84 sur la noix d'entraînement 38, de sorte à réaliser ledit embrayage de la noix d'entraînement 38 avec le tube interne 80 de l'accessoire de cuisine 33. Le tube 55 du palier de roulement 53 est logé dans la cloche externe 79, le bord inférieur 85 de cette cloche externe 79 étant positionné en appui contre une face supérieure 86 du plateau 68 lorsque celui-ci est placé dans le volume intérieur 52 de la cuve, tel que précisé précédemment, préalablement à la mise en place de l'accessoire de cuisine 33. L'accessoire de cuisine 33 sera utilisé en la présence du plateau 68, la pale de brassage 87 de cet accessoire de cuisine 33 raclant la face supérieure 86 du plateau 68. On pourrait toutefois envisager d'utiliser l'accessoire de cuisine 33 avec ou sans le plateau 68, en adaptant le corps 78 de cet accessoire de cuisine 33 pour qu'il puisse être positionné sur le tube 55 du palier de roulement 53, indépendamment de la présence ou non dudit plateau 68. On pourrait aussi prévoir différents accessoires de cuisine 33, par exemple des accessoires de malaxage ou de broyage, certains étant adaptés pour être utilisés avec le plateau 68 placé dans la cuve 9 et d'autres pour être utilisés sans le plateau 68. On peut aussi prévoir un panier (non illustré) en lieu et place du plateau 68, le fond du panier présentant par exemple une conception similaire audit plateau 68.

Le montage de la cuve 9 avec le système d'entraînement 32 et l'accessoire de cuisine 33 s'effectue de la manière suivante : la pièce monobloc 39 est d'abord placée dans le carter 34 en engageant le logement cylindrique 41 sur le plot cylindrique 46, puis le carter 34 est placé sous le fond 13 de la cuve 9, les tétons 97 sur la face inférieure 88 dudit fond 13 étant engagés dans les orifices 44 respectifs sur la platine 43 du carter 34 et la portion tubulaire supérieure 47 du carter 34 est engagée dans l'ouverture centrale 50 du fond 13 jusqu'à ce que l'épaulement externe 48 du carter 34 vienne en appui contre le rebord 51 de cette ouverture centrale 50. Le carter 34 se trouve alors dans une position définie, bloqué en rotation selon l'axe de rotation X2, en appui sous le fond 13 de la cuve 9. Le joint d'étanchéité 66 est placé sur la face supérieure 67 de la cavité aplatie 65 présente sur la pièce d'insert 49 agencée sur le fond 13 de la cuve 9, puis le palier de roulement 53 est inséré dans le volume interne 52 de la cuve 9 et la portion tubulaire inférieure 57 du corps 54 dudit palier de roulement 53 est insérée dans l'ouverture centrale 50 jusqu'à ce que les éléments protubérants 59 sous le disque 56 dudit corps 54 viennent en appui contre la face supérieure 67 de la cavité aplatie 65, le joint d'étanchéité 66 étant ainsi légèrement comprimé entre la cavité aplatie 65 et le disque 56. Dans cette position, la pièce d'insert 49 est pressée sur le dessous par le carter 34 et sur le dessus par le corps 54 du palier de roulement 53, lesquels peuvent alors être assemblés grâce au système d'assemblage à baïonnette, par une rotation du palier de roulement 53 selon l'axe de rotation X2 vis-à-vis du carter 34, ladite rotation permettant de déplacer les pattes 61, initialement placées dans les encoches 63, sous les butées circulaires 64, ce qui maintient en prise le carter 34 avec le corps 54 du palier de roulement 53 en pinçant la pièce d'insert 49 et, ainsi, bloque la rotation selon l'axe de rotation X2 du palier de roulement 53 vis-à-vis du fond 13 de la cuve 9. La compression du joint d'étanchéité 66 entre la pièce d'insert 49 et le disque 56 participe également audit blocage en rotation du palier de roulement 53 vis-à-vis du fond 13 de la cuve 9. Lorsque le plateau 68 est utilisé, celui-ci est placé dans le volume intérieur 52 de la cuve 9 en insérant son ouverture centrale 69 (de forme carrée) sur le tube 55 du palier de roulement 53 puis sur l'élément de contour 72 (de forme carrée) du corps 54 du palier de roulement 53, le piètement 71 du plateau 68 venant reposer sur le fond 13 de la cuve 9, comme le montre la figure 1. Ainsi, le plateau 68 est bloqué en rotation selon l'axe de rotation X2 à l'intérieur de la cuve 9. L'accessoire de cuisine 33 est ensuite placé dans la cuve 9, en engageant le corps 78 de cet accessoire de cuisine 33 sur le tube 55 du palier de roulement 53, la partie d'extrémité inférieure 82 du tube interne 80 venant alors embrayer avec la noix d'entraînement 38. Le démontage du système d'entraînement 32 s'effectue par un mode opératoire inverse.

En regard des figures 17 et 18, la cuve 9 peut être utilisée sans le plateau 68 et sans le palier de roulement 53, en plaçant un bouchon 89 en lieu et place dudit palier de roulement 53, ce bouchon 89 assurant la fermeture du fond 13 de la cuve 9. Pour cela le bouchon 89 comprend une conception similaire à celle du corps 54 du palier de roulement, c'est-à-dire avec une portion tubulaire inférieure 90 dont la conception est semblable à la portion tubulaire inférieure 57 dudit corps 54. Ainsi le contour externe 91 de la portion tubulaire inférieure 90 du bouchon 89 comprend quatre pattes (non illustrées) semblables aux quatre pattes 61 pour la mise en oeuvre d'un système d'assemblage à baïonnette entre le bouchon 89 et le carter 34, afin d'assurer le maintien du bouchon 89 pour l'obturation de l'ouverture centrale 50 sur le fond 13 de la cuve 9. Ce bouchon 89 comprend également un disque 92 semblable au disque 56 sur le corps 54 du palier de roulement 53, le disque 92 fermant toutefois complètement l'extrémité supérieure 90a de la portion tubulaire inférieure 90 dudit bouchon 89. Le disque 92 du bouchon 89 comprend sur sa face inférieure 93 quatre éléments protubérants 94 de forme circulaire similaires aux quatre éléments protubérants 59 sur le disque 56 du corps 54 du palier de roulement 53. Ces éléments protubérants 94 du bouchon 89 pressent sur la face supérieure 67 de la cavité aplatie 65 de la pièce d'insert 49 lorsque le bouchon 89 est assemblé avec le carter 34 grâce au système d'assemblage à baïonnette. Le joint d'étanchéité 66 est également comprimé entre la face supérieure 67 de ladite cavité aplatie 65 et la face inférieure 93 du disque 92 du bouchon 89. Etant donné que la portion d'extrémité supérieure 38a de la noix d'entraînement 38 traverse l'ouverture centrale 50 sur le fond de la cuve 9 et se place dans le volume intérieur 52 de ladite cuve 9, la pièce monobloc 39 doit être retirée du carter 34 avant la mise en place du bouchon 89, comme le montrent les figures 17 et 18. On pourrait toutefois envisager une variante selon laquelle la portion d'extrémité supérieure 38a de la noix d'entraînement 38 serait positionnée sous l'ouverture centrale 50, en prévoyant un tube interne 80 sur le corps 78 de l'accessoire de cuisine 33 de longueur adaptée pour venir embrayer ladite noix d'entraînement 38 ; dans ce cas le bouchon 89 pourrait être mis en place sur le fond 13 de la cuve 9 et assemblé avec le carter 34, en conservant la pièce monobloc 39 logée dans ledit carter 34.

Lors de la mise en place du bouchon 89 sur la cuve 9, l'accessoire de cuisine 33 est d'abord retiré, puis le plateau 68 et enfin le palier de roulement 53. Le carter 34 peut ensuite être dégagé du fond 13 de la cuve 9 pour extraire la pièce monobloc 39 ; dans ce cas, le carter 34 est ensuite repositionné en appui sous le fond 13 de la cuve 9, comme précédemment pour le montage du palier de roulement 53. On pourrait toutefois envisager d'extraire la pièce monobloc 39 du carter 34 tout en maintenant le carter 34 en appui sous le fond 13 de la cuve 9, l'extraction de la pièce monobloc 39 se faisant alors par l'ouverture centrale 50, en la passant par le volume intérieur 52 de la cuve 9. Le joint d'étanchéité 66 est placé sur la face supérieure 67 de la cavité aplatie 65, puis le bouchon 89 est inséré dans la cuve 9 et la portion tubulaire inférieure 90 dudit bouchon 89 est insérée dans l'ouverture centrale 50 jusqu'à ce que les éléments protubérants 94 sous le disque 92 dudit bouchon 89 viennent en appui contre la face supérieure 67 de ladite cavité aplatie 65, le joint d'étanchéité 66 étant ainsi comprimé entre la cavité aplatie 65 et le disque 92. Dans cette position la pièce d'insert 49 est pressée sur le dessous par le carter 34 et sur le dessus par le bouchon 89, lesquels peuvent être alors assemblés grâce au système d'assemblage à baïonnette, par une rotation du bouchon 89 selon l'axe de rotation X2 vis-à-vis du carter 34, ladite rotation permettant de déplacer les pattes (non illustrées), initialement placées dans les encoches 63, sous les butées circulaires 64, maintenant ainsi en prise le carter 34 avec le bouchon 89 en pinçant la pièce d'insert 49, ce qui bloque la rotation selon l'axe de rotation X2 du bouchon 89 vis-à-vis du fond 13 de la cuve 9. La compression du joint d'étanchéité 66 entre la pièce d'insert 49 et le disque 89 participe également audit blocage en rotation du bouchon 89 vis-à-vis du fond 13 de la cuve 9. Le démontage du bouchon 89 s'effectue par un mode opératoire inverse.

Cette conception de l'appareil 1 présente pour avantage de réaliser des préparations culinaires diverses et variées au moyen du dispositif de chauffe 11 de l'air et du dispositif de circulation 12 de l'air, d'une part, et du dispositif additionnel de chauffe 14 de la cuve 9 par conduction thermique, d'autre part. Parmi ces préparations culinaires, il est par exemple possible de mettre de l'eau dans le fond 13 de la cuve 9, en-dessous du plateau 68 sur lequel sont positionnés des aliments, et de chauffer l'eau au moyen du dispositif additionnel de chauffe 14, ce qui permet de réaliser une cuisson vapeur des aliments placés sur le plateau 68, ces aliments pouvant être brassés grâce à l'accessoire de cuisine 33 et éventuellement subir une deuxième cuisson avec de l'air chaud au moyen du dispositif de chauffe 11 et du dispositif de circulation d'air 12.

La description ci-avant n'est en rien limitative, d'autres variantes d'appareil 1 pouvant être envisagées dans le cadre de l'invention. On pourrait par exemple envisager la mise en oeuvre de l'invention sur un appareil 1 sans tiroir 3, mais avec un couvercle (non illustré) agencé sur la partie supérieure 2a du corps 2, l'ouverture du couvercle permettant le positionnement de la cuve 9 dans l'enceinte de cuisson 6 et, inversement, son retrait de celle-ci.

Le piètement 71 sur le plateau 68 permet de maintenir un espacement 95 entre le fond 13 de la cuve 9 et la face inférieure 70 du plateau 68. On pourrait prévoir, en variante, des pattes de support (non illustrées) sur le contour interne 96 de la cuve 9 et permettant de soutenir le plateau 68 afin de mettre en oeuvre ledit espacement 95.

## Revendications

1. Appareil (1) de cuisson pour la réalisation d'une préparation culinaire, lequel comprend un corps (2) muni d'une enceinte de cuisson (6), une cuve (9) de réception d'aliments apte à être placée dans l'enceinte de cuisson et retirée de celle-ci, le corps comprenant un dispositif motorisé (28) entraînant en rotation un pignon denté (29) accessible depuis l'enceinte de cuisson, la cuve comprenant un fond (13) muni d'une première ouverture centrale (50), une noix d'entraînement (38) montée en rotation selon un axe de rotation (X2) perpendiculaire au fond de la cuve et communiquant avec le volume intérieur (52) de la cuve au travers de la première ouverture centrale (50) et une roue dentée (37) montée en rotation selon l'axe de rotation (X2) en-dessous du fond (13) et assujettie à la noix d'entraînement (38), ladite roue dentée (37) engrenant avec le pignon denté (29) lorsque la cuve est placée dans l'enceinte de cuisson, la cuve (9) comprenant un carter (34) amovible placé en-dessous de la première ouverture centrale (50) et configuré pour prendre appui contre le dessous du fond (13) de la cuve et pour recevoir et maintenir la roue dentée (37) et la noix d'entraînement (38), montées en rotation selon l'axe de rotation (X2), **caractérisé en ce que** la cuve (9) comprend en outre un palier de roulement (53) amovible placé dans le volume intérieur (52) de la cuve, le palier de roulement étant muni d'un corps (54) et d'un tube (55), le corps (54) étant configuré pour traverser la première ouverture centrale (50) et prendre appui contre le dessus du fond (13) de la cuve et pour venir en prise avec le carter (34) grâce à un système d'assemblage de sorte que le carter (34) et le corps (54) du palier de roulement (53) demeurent pressés de part et d'autre contre le fond (13) de la cuve, le tube (55) prolongeant le corps (54) vers le haut dans le volume intérieur (52) de la cuve au-dessus de la première ouverture centrale (50) et étant apte à recevoir en rotation selon l'axe de rotation (X2) un accessoire de cuisine (33) placé dans le volume intérieur de la cuve, la noix d'entraînement (38) s'engageant au moins dans le corps (54) du palier de roulement (53) lorsque le carter (34) et le palier de roulement (53) sont en prise, de sorte que ladite noix d'entraînement (38) est apte à engrener avec l'accessoire de cuisine (33) lorsque celui-ci est engagé sur le tube (55).

2. Appareil (1) selon la revendication 1, lequel comprend un plateau (68) comprenant une seconde ouverture centrale (69) permettant le passage du tube (55) du palier de roulement (53) lorsque ledit plateau est placé dans le volume intérieur (52) de la cuve (9), des moyens de blocage de la rotation du plateau selon l'axe de rotation (X2) étant agencés entre ledit plateau (68) et le corps (54) du palier de roulement (53).

3. Appareil (1) selon l'une quelconque des revendications 1 ou 2, dans lequel la cuve (9) comprend un joint d'étanchéité (66) positionné à la périphérie de la première ouverture centrale (50) au-dessus du fond (13) de la cuve, le corps (54) du palier de roulement (53) comprenant un disque (56) configuré pour que le joint d'étanchéité (66) soit comprimé entre le dessus du fond (13) de la cuve et ledit disque (56) lorsque le palier de roulement est en prise avec le carter (34).

4. Appareil (1) selon l'une quelconque des revendications 1 à 3, dans lequel le carter (34) comprend une portion tubulaire supérieure (47) munie d'un épaulement externe (48), la portion tubulaire supérieure (47) étant configurée pour s'emboîter dans la première ouverture centrale (50) jusqu'à ce qu'un rebord (51) du fond (13) de la cuve (9), définissant ladite première ouverture centrale, vienne en appui contre ledit épaulement externe (48).

5. Appareil (1) selon l'une quelconque des revendications 1 à 4, dans lequel le carter (34) comprend un fond (45) muni d'un plot cylindrique (46), la noix d'entraînement (38) comprenant un logement cylindrique (41) s'engageant sur le plot cylindrique (46) pour un montage en liaison pivot selon l'axe de rotation (X2) de la noix d'entraînement (38) et de la roue dentée (37) vis-à-vis du carter.

6. Appareil (1) selon l'une quelconque des revendications 1 à 5, dans lequel un système de positionnement est agencé entre le carter (34) et le fond (13) de la cuve (9) pour orienter le carter autour de l'axe de rotation (X2) dans une position définie.

7. Appareil (1) selon la revendication 6, dans lequel le système de positionnement comprend une platine (43) agencée sur le carter (34) et munie d'au moins un orifice (44), de préférence trois orifices, et au moins un téton (97) agencé sous le fond (13) de la cuve (9), de préférence trois tétons, ledit au moins un téton (97) s'engageant dans ledit au moins un orifice (44) lors de la mise en place du carter sous le fond de la cuve selon ladite position définie.

8. Appareil (1) selon l'une quelconque des revendications 1 à 7, dans lequel le carter (34) comprend un contour muni d'une fenêtre (36) permettant le passage d'une partie (37a) de la roue dentée (37) pour son engrènement avec le pignon denté (29) lors de la mise en place de la cuve (9) dans l'enceinte de cuisson (6).

9. Appareil (1) selon l'une quelconque des revendications 1 à 8, lequel comprend un bouchon (89) amovible configuré pour être placé en lieu et place du palier de roulement (53) lorsque ce dernier est retiré de la cuve (9), le bouchon étant configuré pour traverser la première ouverture centrale (50) en prenant appui contre le dessus du fond (13) de la cuve (9) et pour venir en prise avec le carter (34) grâce à un second système d'assemblage identique au premier système d'assemblage, de sorte que le carter (34) et le bouchon (89) demeurent pressés de part et d'autre contre le fond (13) de la cuve (9).

10. Appareil (1) selon l'une quelconque des revendications 1 à 9, lequel comprend un premier dispositif de chauffe (14) permettant de chauffer la cuve (9) de réception d'aliments par conduction thermique lorsque ladite cuve est placée dans l'enceinte de cuisson (6).

11. Appareil (1) selon l'une quelconque des revendications 1 à 10, lequel est un appareil de cuisson à air chaud qui comprend un second dispositif de chauffe (11) permettant de chauffer de l'air et un dispositif de circulation (12) permettant une circulation de l'air chauffé dans la cuve (9) de réception d'aliments lorsqu'elle est placée dans l'enceinte de cuisson (6).

12. Procédé de mise en place d'un accessoire de cuisine (33) sur une cuve (9) d'un appareil (1) de cuisson présentant les caractéristiques de l'une quelconque des revendications 1 à 11, lequel comprend les étapes suivantes :
- positionnement de la roue dentée (37) et de la noix d'entraînement (38), assujetties entre elles, à l'intérieur du carter (34),
- positionnement du carter (34) en appui contre le dessous du fond (13) de la cuve (9), dans une position définie garantissant l'engrènement de la roue dentée (37) avec le pignon denté (29) lors de la mise en place de la cuve (9) dans l'enceinte de cuisson (6), la noix d'entraînement (38) communiquant avec le volume intérieur (52) de la cuve (9) au travers de la première ouverture centrale (50) sur le fond (13) de la cuve
- positionnement du palier de roulement (53) dans le volume intérieur (52) de la cuve (9) et introduction du corps (54) du palier de roulement au travers de la première ouverture centrale (50) jusqu'à ce que ledit corps (54) vienne en appui contre le dessus du fond (13) de la cuve,
- mise en place du premier système d'assemblage pour fixer le carter (34) avec le corps (54) du palier de roulement (53) qui pressent de part et d'autre contre le fond (13) de la cuve (9),
- positionnement de l'accessoire de cuisine (33) sur le tube (55) du palier de roulement (53), ledit accessoire de cuisine (33) venant engrener avec la noix d'entraînement (38).

13. Procédé selon la revendication 12, l'appareil (1) présentant les caractéristiques de la revendication 2, lequel comprend préalablement au positionnement de l'accessoire de cuisine (33) sur le tube (55) du palier de roulement (53), une étape de positionnement du plateau (68) dans le volume intérieur de la cuve en introduisant le tube (55) par la seconde ouverture centrale (69) dudit plateau puis une étape de mise en place des moyens de blocage entre ledit plateau (68) et le corps (54) du palier de roulement (53).

## Patentansprüche

1. Kocheinrichtung (1) zur Herstellung einer kulinarischen Zubereitung, welche einen Körper (2) umfasst, der mit einem Kochraum (6), einem Aufnahmebehälter (9) von Nahrungsmitteln, der imstande ist, in dem Kochraum platziert zu werden, und aus demselben entnommen zu werden, versehen ist, wobei der Körper eine motorisierte Vorrichtung (28) umfasst, die ein Zahnritzel (29) in Drehung antreibt, das aus dem Kochraum zugänglich ist, wobei der Behälter einen Boden (13) umfasst, der mit einer ersten mittleren Öffnung (50) versehen ist, einen Antriebsstern (38), der entlang einer Drehachse (X2) senkrecht zum Boden des Behälters drehend montiert ist, und mit dem Innenvolumen (52) des Behälters durch die erste mittlere Öffnung (50) hindurch und ein Zahnrad (37) kommuniziert, das entlang der Drehachse (X2) unterhalb des Bodens (13) drehend montiert ist, und dem Antriebsstern (38) unterliegt, wobei das Zahnrad (37) in das Zahnritzel (29) eingreift, wenn der Behälter in dem Kochraum platziert ist, wobei der Behälter (9) ein abnehmbares Gehäuse (34) umfasst, das unterhalb der ersten mittleren Öffnung (50) platziert ist, und konfiguriert ist, um sich an die Unterseite des Bodens (13) des Behälters anzulegen, und um das Zahnrad (37) und den Antriebsstern (38), die entlang der Drehachse (X2) drehend montiert sind, aufzunehmen und zu halten, **dadurch gekennzeichnet, dass** der Behälter (9) weiter ein abnehmbares Wälzlager (53) umfasst, das in dem Innenvolumen (52) des Behälters platziert ist, wobei das Wälzlager mit einem Körper (54) und einem Rohr (55) versehen ist, der Körper (54) konfiguriert ist, um die erste mittlere Öffnung (50) zu durchqueren, und sich an der Oberseite des Bodens (13) des Behälters anzulegen, und um dank eines Verbindungssystems in das Gehäuse (34) einzugreifen, sodass das Gehäuse (34) und der Körper (54) des Wälzlagers (53) beiderseits am Boden (13) des Behälters geklemmt bleiben, wobei das Rohr (55) den Körper (54) nach oben ins Innenvolumen (52) des Behälters oberhalb der ersten mittleren Öffnung (50) verlängert, und imstande ist, entlang der Drehachse (X2) ein Küchenzubehör (33) drehend aufzunehmen, das im Innenvolumen des Behälters platziert ist, wobei der Antriebsstern (38) mindestens in den Körper (54) des Wälzlagers (53) eingreift, wenn das Gehäuse (34) und das Wälzlager (53) in Eingriff sind, sodass der Antriebsstern (38) imstande ist, in das Küchenzubehör (33) einzugreifen, wenn dieses am Rohr (55) aufgesetzt ist.

2. Einrichtung (1) nach Anspruch 1, welche eine Platte (68) umfasst, die eine zweite mittlere Öffnung (69) umfasst, welche den Durchgang des Rohres (55) des Wälzlagers (53) erlaubt, wenn die Platte in dem Innenvolumen (52) des Behälters (9) platziert ist, wobei Mittel zum Blockieren der Drehung der Platte entlang der Drehachse (X2) zwischen der Platte (68) und dem Körper (54) des Wälzlagers (53) angeordnet sind.

3. Einrichtung (1) nach einem der Ansprüche 1 oder 2, wobei der Behälter (9) eine Dichtung (66) umfasst, die an der Peripherie der ersten mittleren Öffnung (50) über dem Boden (13) des Behälters positioniert ist, wobei der Körper (54) des Wälzlagers (53) eine Scheibe (56) umfasst, die konfiguriert ist, damit die Dichtung (66) zwischen der Oberseite des Bodens (13) des Behälters und der Scheibe (56) zusammengedrückt wird, wenn das Wälzlager in Eingriff mit dem Gehäuse (34) ist.

4. Einrichtung (1) nach einem der Ansprüche 1 bis 3, wobei das Gehäuse (34) einen oberen röhrenförmigen Abschnitt (47) umfasst, der mit einem äußeren Ansatz (48) versehen ist, wobei der obere röhrenförmige Abschnitt (47) konfiguriert ist, um in die erste mittlere Öffnung (50) einzurasten, bis sich eine Kante (51) des Bodens (13) des Behälters (9), die die erste mittlere Öffnung definiert, an den äußeren Ansatz (48) anlegt.

5. Einrichtung (1) nach einem der Ansprüche 1 bis 4, wobei das Gehäuse (34) einen Boden (45) umfasst, der mit einem zylindrischen Stift (46) versehen ist, der Antriebsstern (38) eine zylindrische Aufnahme (41) umfasst, die für eine Schwenkverbindungsmontage entlang der Drehachse (X2) des Antriebssterns (38) und des Eingangsrades (37) gegenüber dem Gehäuse in den zylindrischen Stift (46) eingreift.

6. Einrichtung (1) nach einem der Ansprüche 1 bis 5, wobei ein System zum Positionieren zwischen dem Gehäuse (34) und dem Boden (13) des Behälters (9) angeordnet ist, um das Gehäuse um die Drehachse (X2) herum in einer definierten Position auszurichten.

7. Einrichtung (1) nach Anspruch 6, wobei das System zum Positionieren eine Platine (43) umfasst, die am Gehäuse (34) angeordnet ist, und mit mindestens einer Öffnung (44), vorzugsweise drei Öffnungen, und mindestens einem Zapfen (97), der unter dem Boden (13) des Behälters (9) angeordnet ist, vorzugsweise drei Zapfen versehen ist, wobei der mindestens eine Zapfen (97) beim Anbringen des Gehäuses unter dem Boden des Behälters entsprechend der definierten Position in die mindestens eine Öffnung (44) eingreift.

8. Einrichtung (1) nach einem der Ansprüche 1 bis 7, wobei das Gehäuse (34) eine Kontur umfasst, die mit einem Fenster (36) versehen ist, das den Durchlass eines Teils (37a) des Zahnrades (37) für dessen Eingriff in das Zahnritzel (29) beim Anbringen des Behälters (9) in dem Kochraum (6) erlaubt.

9. Einrichtung (1) nach einem der Ansprüche 1 bis 8, welche einen abnehmbaren Stopfen (89) umfasst, der konfiguriert ist, um anstelle des Wälzlagers (53) platziert zu werden, wenn letzteres aus dem Behälter (9) entfernt wird, wobei der Stopfen konfiguriert ist, um die erste mittlere Öffnung (50) zu durchqueren und sich an die Oberseite des Bodens (13) des Behälters (9) anzulegen, und um dank eines zweiten Montagesystems gleich dem ersten Montagesystem in Eingriff mit dem Gehäuse (34) zu kommen, sodass das Gehäuse (34) und der Stopfen (89) beiderseits am Boden (13) des Behälters (9) geklemmt bleiben.

10. Einrichtung (1) nach einem der Ansprüche 1 bis 9, welche eine erste Heizvorrichtung (14) umfasst, die es erlaubt, den Behälter (9) zur Aufnahme von Nahrungsmitteln durch Wärmeleitung zu erwärmen, wenn der Behälter im Kochraum (6) platziert wird.

11. Einrichtung (1) nach einem der Ansprüche 1 bis 10, welche eine Heißluft-Kocheinrichtung ist, die eine zweite Heizvorrichtung (11), die es erlaubt, Luft zu erwärmen, und eine Umlaufvorrichtung (12) umfasst, die einen Umlauf von erwärmter Luft in dem Behälter (9) zur Aufnahme von Nahrungsmitteln erlaubt, wenn er im Kochraum (6) platziert wird.

12. Verfahren zum Anbringen eines Küchenzubehörs (33) in einem Behälter (9) einer Kocheinrichtung (1), welche die Eigenschaften nach einem der Ansprüche 1 bis 11 aufweist, die folgenden Schritte umfassend:
- Positionieren des Zahnrades (37) und des Antriebssterns (38), die einander unterstellt sind, im Inneren des Gehäuses (34),
- Positionieren des Gehäuses (34) an der Unterseite des Bodens (13) des Behälters (9) anliegend, in einer definierten Position, die den Eingriff des Zahnrades (37) mit dem Zahnritzel (29) beim Anbringen des Behälters (9) in dem Kochraum (6) gewährleistet, wobei der Antriebsstern (38) mit dem Innenvolumen (52) des Behälters (9) durch die erste mittlere Öffnung (50) am Boden (13) des Behälters hindurch kommuniziert
- Positionieren des Wälzlagers (53) in dem Innenvolumen (52) des Behälters (9) und Einsetzen des Körpers (54) des Wälzlagers durch die erste mittlere Öffnung (50) hindurch, bis der Körper (54) an der Oberseite des Bodens (13) des Behälters anliegt,
- Anbringen des ersten Montagesystems zum Befestigen des Gehäuses (34) mit dem Körper (54) des Wälzlagers (53), die beiderseits an den Boden (13) des Behälters (9) geklemmt werden,
- Positionieren des Küchenzubehörs (33) am Rohr (55) des Wälzlagers (53), wobei das Küchenzubehör (33) in den Antriebsstern (38) eingreift.

13. Verfahren nach Anspruch 12, wobei die Einrichtung (1) die Eigenschaften nach Anspruch 2 aufweist, welches vor dem Positionieren des Küchenzubehörs (33) auf dem Rohr (55) des Wälzlagers (53) einen Schritt zum Positionieren der Platte (68) in dem Innenvolumen des Behälters durch Einführen des Rohres (55) durch die zweite mittlere Öffnung (69) der Platte hindurch, und danach einen Schritt zum Anbringen der Mittel zum Blockieren zwischen der Platte (68) und dem Körper (54) des Wälzlagers (53) umfasst.

## Claims

1. Cooking appliance (1) for producing a food preparation, which comprises a body (2) provided with a cooking chamber (6), a vessel (6) for receiving food capable of being placed in the cooking chamber and removed from it, the body comprising a motorised device (28) driving a toothed pinion (29) accessible from the cooking chamber, the vessel comprising a bottom (13) provided with a first central opening (50), a drive spindle (38) mounted in rotation about an axis of rotation (X2) perpendicular to the bottom of the vessel and communicating with the inner volume (52) of the vessel through the first central opening (50) and a toothed wheel (37) mounted in rotation about the axis of rotation (X2) below the bottom (13) and subservient to the drive spindle (38), said toothed wheel (37) meshing with the toothed pinion (29) when the vessel is placed in the cooking chamber, the vessel (9) comprising a removable casing (34) placed below the first central opening (50) and configured to bear against the underside of the bottom (13) of the vessel and to receive and hold the toothed wheel (37) and the drive spindle (38), mounted in rotation about the axis of rotation (X2), **characterised in that** the vessel (9) further comprises a removable roller bearing (53) placed in the inner volume (52) of the vessel, the roller bearing being provided with a body (54) and a tube (55), the body (54) being configured to pass through the first central opening (50) and bear against the topside of the bottom (13) of the vessel and to engage with the casing (34) thanks to an assembly system such that the casing (34) and the body (54) of the roller bearing (53) remain pressed on either side against the bottom (13) of the vessel, the tube (55) extending the body (54) upwards in the inner volume (52) of the vessel above the first central opening (50) and being capable of receiving in rotation about the axis of rotation (X2), a cooking accessory (33) placed in the inner volume of the vessel, the drive spindle (38) being engaged at least in the body (54) of the roller bearing (53) when the casing (34) and the roller bearing (53) are engaged, such that said drive spindle (38) is capable of meshing with the cooking accessory (33) when it is engaged on the tube (55).

2. Appliance (1) according to claim 1, which comprises a plate (68) comprising a second central opening (69) enabling the passage of the tube (55) of the roller bearing (53) when said plate is placed in the inner volume (52) of the vessel (9), means for blocking the rotation of the plate about the axis of rotation (X2) being arranged between said plate (68) and the body (54) of the roller bearing (53).

3. Appliance (1) according to any one of claims 1 or 2, wherein the vessel (9) comprises a seal (66) positioned at the periphery of the first central opening (50) above the bottom (13) of the vessel, the body (54) of the roller bearing (53) comprising a disc (56) configured such that the seal (66) is compressed between the topside of the bottom (13) of the vessel and said disc (56) when the roller bearing is engaged with the casing (34).

4. Appliance (1) according to any one of claims 1 to 3, wherein the casing (34) comprises an upper tubular portion (47) provided with an external shoulder (48), the upper tubular portion (47) being configured to be interlocked in the first central opening (50) up to a rim (51) of the bottom (13) of the vessel (9), defining said first central opening, bears against said external shoulder (48).

5. Appliance (1) according to any one of claims 1 to 4, wherein the casing (34) comprises a bottom (45) provided with a cylindrical post (46), the drive spindle (38) comprising a cylindrical housing (41) engaging on the cylindrical post (46) for a mounting in pivot connection about the axis of rotation (X2) of the drive spindle (38) and of the toothed wheel (37) vis-à-vis the casing.

6. Appliance (1) according to any one of claims 1 to 5, wherein a positioning system is arranged between the casing (34) and the bottom (13) of the vessel (9) to orient the casing about the axis of rotation (X2) in a defined position.

7. Appliance (1) according to claim 6, wherein the positioning system comprises a plate (43) arranged on the casing (34) and provided with at least one orifice (44), preferably three orifices, and at least one nipple (97) arranged under the bottom (13) of the vessel (9), preferably three nipples, said at least one nipple (97) being engaged in said at least one orifice (44) during the implementation of the casing under the bottom of the vessel according to said defined position.

8. Appliance (1) according to any one of claims 1 to 7, wherein the casing (34) comprises a contour provided with a window (36) enabling the passage of a part (37a) of the toothed wheel (37) for its meshing with the toothed pinion (29) during the implementation of the vessel (9) in the cooking chamber (6).

9. Appliance (1) according to any one of claims 1 to 8, which comprises a removable stopper (89) configured to be placed instead of the roller bearing (53) when the latter is removed from the vessel (9), the stopper being configured to pass through the first central opening (50) by bearing against the topside of the bottom (13) of the vessel (9) and to engage with the casing (34) thanks to a second assembly system identical to the first assembly system, such that the casing (34) and the stopper (89) remain pressed on either side against the bottom (13) of the vessel (9).

10. Appliance (1) according to any one of claims 1 to 9, which comprises a first heating device (14) making it possible to heat the vessel (9) for receiving food by thermal conduction when said vessel is placed in the cooking chamber (6).

11. Appliance (1) according to any one of claims 1 to 10, which is a hot air cooking appliance which comprises a second heating device (11) making it possible to heat the air and a circulation device (12) enabling a circulation of the air heated in the vessel (9) for receiving food when it is placed in the cooking chamber (6).

12. Method for implementing a cooking accessory (33) on a vessel (9) of a cooking appliance (1) having the features of any one of claims 1 to 11, which comprises the following steps:
- positioning the toothed wheel (37) and the drive spindle (38), subservient to one another, inside the casing (34),
- positioning of the casing (34) born against the underside of the bottom (13) of the vessel (9), in a defined position guaranteeing the meshing of the toothed wheel (37) with the toothed pinion (29) during the implementation of the vessel (9) in the cooking chamber (6), the drive spindle (38) communicating with the inner volume (52) of the vessel (9) through the first central opening (50) on the bottom (13) of the vessel,
- positioning of the roller bearing (53) in the inner volume (52) of the vessel (9) and introducing the body (54) of the roller bearing through the first central opening (50) until said body (54) bears against the topside of the bottom (13) of the vessel,
- implementing the first assembly system to fix the casing (34) with the body (54) of the roller bearing (53) which pass on either side against the bottom (13) of the vessel (9),
- positioning of the cooking accessory (33) on the tube (55) of the roller bearing (53), said cooking accessory (33) meshing with the drive spindle (38).

13. Method according to claim 12, the appliance (1) having the features of claim 2, which comprises, prior to the positioning of the cooking accessory (33) on the tube (55) of the roller bearing (53), a step of positioning the plate (68) in the inner volume of the vessel by introducing the tube (55) through the second central opening (69) of said plate, then a step of implementing blocking means between said plate (68) and the body (54) of the roller bearing (53).
